# EUROPÄISCHE PATENTANMELDUNG

(11) **EP 0 577 933 A1**
(43) Veröffentlichungstag der Anmeldung: **12.01.1994**
(21) Anmeldenummer: 93105902.6
(22) Anmeldetag: 10.04.1993
(51) Int. Cl.: F16K 3/18

(54) **Brillenschieber für Rohrleitungen, insbesondere für Gichtgas eines Hochofens**

(30) Priorität: 04.07.1992 DE 4222008
(71) Anmelder: Thyssen Stahl Aktiengesellschaft, D-47166 Duisburg (DE)
(72) Erfinder: Schmitz, Dieter, Dipl.-Ing., W-4223 Voerde 2 (DE)
(74) Vertreter: Cohausz & Florack Patentanwälte

(57) **Zusammenfassung**

Die Erfindung bezieht sich auf einen Brillenschieber für Rohrleitungen. Der Brillenschieber weist in einem Rahmen (2) nebeneinander angeordnet eine Vollscheibe (6) und eine Leerscheibe (7) auf. Beide Scheiben (6,7) sind zweiteilig ausgebildet, wobei die Teile (6a,7a,7b) einer jeden Scheibe (6,7) mittels Spreizelementen (9a,9b) gegen Dichtflächen (13,14) an den Rohrleitungen preßbar sind. An den den Dichtflächen (13,14) gegenüberliegenden Stirnseiten der beiden Teile (6a,7a,7b) sind konzentrisch Ringdichtungen (11a,11b,12a,12b) angeordnet, die bei an den Dichtflächen (13,14) angedrückten Teilen (7a,7b) jeweils einen Ringraum (15, 16) abschließen, der mit einem gasförmigen Medium druckbeaufschlagbar ist. Auf diese Art und Weise wird die Druckdifferenz zwischen dem Inneren der Rohrleitungen und deren Äußerem stufenweise abgebaut. Kleine Undichtigkeiten in der dem Rohrinneren zugewandten ersten Dichtung (11a, 12a) sind unkritisch, weil die Gefahr, daß sie sich durch Abrieb austretender Partikel schnell vergrößern, wegen des geringen Druckunterschiedes gering ist. Außerdem sorgt die zweite Ringdichtung (11b,12b) dafür, daß dieses Leck nicht zu einem Austritt des Gases in die Atmosphäre führt.

## Beschreibung

Die Erfindung betrifft einen Brillenschieber für Rohrleitungen, insbesondere für Gichtgas eines Hochofens, der in einer senkrecht zu den Rohrleitungen und zwischen an den Rohrleitungen ausgebildeten, einander gegenüberliegenden Dichtflächen stehenden Ebene geradlinig bewegbar ist und der in einem Brillenrahmen eine zweiteilige, als Absperrplatte dienende Vollscheibe und daneben eine zweiteilige Leerscheibe aufweist, wobei die beiden Teile jeder Scheibe den Dichtflächen an den Rohrleitungen zugewandte Ringdichtungen und Spreizelemente aufweisen, mit denen die beiden Teile mit ihren Ringdichtungen gegen die Dichtflächen anpreßbar sind.

Solche Brillenschieber werden vorzugsweise bei Rohrleitungen mit großem Querschnitt eingesetzt. Ein besonderes Problem besteht dabei darin, eine möglichst gute Abdichtung zwischen den zusammenwirkenden Dichtflächen und Ringdichtungen zu erreichen.

Bei einem bekannten Rohrschieber der eingangs genannten Art (DE 28 28 829 C3) hat man versucht, diese Schwierigkeiten mit einer besonderen geometrischen Anordnung von Dichtflächen und den beiden zweiteiligen Scheiben zu lösen. Sowohl die Dichtflächen als auch die beiden Teile jeder Scheibe sind keilförmig angeordnet. Es ist vorgesehen, daß die beiden Scheiben quer zur geradlinigen Bewegung in Richtung des Keils mittels der Spreizelemente beweglich sind. Es mag sein, daß auf diese Art und Weise eine verbesserte Dichtwirkung gegenüber Brillenschiebern erreicht werden kann, bei denen die Dichtflächen parallel zueinander liegen und die beiden Teile einer jeden Scheibe nur in einer Richtung, d.h. in Richtung der Dichtflächen, bewegt werden können. Diese verbesserte Dichtwirkung ist aber mit einer verhältnismäßig aufwendigen Konstruktion sowohl hinsichtlich der geometrischen Lage der Dichtflächen als auch der Scheiben mit ihrem Spreizmechanismus verbunden.

Beim praktischen Einsatz eines herkömmlichen Brillenschiebers an der Gichtgasrohrleitung eines Hochofens hat sich gezeigt, daß schon eine winzige Fehlerstelle an der Dichtung sich schnell zu einer größeren Undichtigkeit ausweitet, weil über diese undichte Stelle das Gichtgas mit in ihm enthaltenen Partikeln entweicht, die schmirgelnd sowohl auf die Dichtung als auch auf die Dichtfläche einwirken. Da Gichtgas aufgrund seines hohen CO-Gehaltes giftig ist, ist es erforderlich, sofort nach Feststellen einer Undichtigkeit den Hochofen stillzusetzen und den Brillenschieber zu reparieren.

Der Erfindung liegt die Aufgabe zugrunde, einen Brillenschieber mit verbesserter Dichtwirkung zu schaffen, bei dem geringe Undichtigkeiten der Ringdichtung für eine gewisse Zeit in Kauf genommen werden können, ohne daß durch über die undichte Stelle austretende Gase die Umwelt belastet wird.

Diese Aufgabe wird erfindungsgemäß bei einem Brillenschieber der eingangs genannten Art dadurch gelöst, daß jedes Teil der Voll- und Leerscheibe mindestens eine weitere, mit radialem Abstand zur ersten Ringdichtung angeordnete Ringdichtung aufweist, und daß jeder von an derselben Dichtfläche anliegenden benachbarten Ringdichtungen abgeschlossener Ringraum über eine Leitung mit einem gasförmigen Medium - vorzugsweise Stickstoff - druckbeaufschlagbar ist.

Bei dem erfindungsgemäßen Brillenschieber erreicht man mit dem druckbeaufschlagten Ringraum eine einstellbare Druckentlastung der der Rohrleitung zugewandten inneren Ringdichtung. Deshalb ist die Gefahr, daß diese Ringdichtung undicht wird, vergleichsweise gering. Aber selbst eine geringe Undichtigkeit dieser inneren Ringdichtung führt nicht dazu, daß Partikel, die mit dem durch diese undichte Stelle austretenden Gas austreten, durch Abrieb schnell die undichte Stelle vergrößern, weil die Druckdifferenz zwischen dem Rohrinneren und dem Ringraum auf einen beliebig kleinen Wert eingestellt werden kann. Da bei einer Druckdifferenz die durch eine kleine undichte Stelle an der ersten Ringdichtung austretenden Gase durch die zweite Ringdichtung an einem Austritt in die Atmosphäre gehindert werden, ist es nicht erforderlich, nach Feststellen einer Undichtigkeit den Hochofen sofort stillzusetzen und den Brillenschieber zu reparieren. Die Reparatur kann bis zu einem passenden späteren Zeitpunkt aufgeschoben werden.

Eine vollständige Druckentlastung der unmittelbar dem Gas ausgesetzten inneren Ringdichtung läßt sich erreichen, wenn die Druckbeaufschlagung dieses Ringraums mit einem Druck erfolgt, der gleich dem Innendruck der Rohrleitungen ist. In diesem Fall kann kein Gas mit Partikeln die undichte Stelle vergrößern, auch dann nicht, wenn zusätzlich die äußere Ringdichtung undicht werden sollte. Durch die undichte äußere Ringdichtung kann nun das dem Ringraum zugeführte Druckmedium entweichen. Bei einer vollständigen Druckentlastung der inneren Ringdichtung ist es allerdings erforderlich, daß die äußere Ringdichtung den gesamten Druckunterschied zwischen innen und außen abbaut. Das macht eine entsprechend stark dimensionierte Dichtung erforderlich. Sofern dies nicht erwünscht ist, kann nach einer Ausgestaltung der Erfindung vorgesehen sein, auch die innere Ringdichtung am Abbau des Druckunterschiedes zu beteiligen. Dies läßt sich dadurch verwirklichen, daß der Druck in dem Ringraum auf einen Wert eingestellt wird, der zwischen dem Innen- und Außendruck liegt.

Die Leitungen für die Druckbeaufschlagung der Ringräume mit gasförmigem Medium sind vorzugsweise in jedem Teil der Voll- und Leerscheibe ausgebildet. Zur Überwachung des in den Ringräumen herrschenden Druckes sollte an dem Ringraum bzw. der dahin führenden Leitungen ein Druckmanometer angeschlossen sein. Für die Einstellung des Druckes in den Ringräumen sind vorzugsweise Druckreduzierventile vorgesehen. Vorzugsweise stellt ein Druckregler automatisch das gasförmige Medium in den Ringräumen ein.

Im folgenden wird die Erfindung anhand einer ein Ausführungsbeispiel darstellenden Zeichnung näher erläutert. Im einzelnen zeigen:
- Fig. 1: einen Brillenschieber in Ansicht nach der Schnittlinie I-I der Fig. 2,
- Fig. 2: eine Leerscheibe des Brillenschiebers gemäß Fig. 1 zwischen zwei Dichtflächen an Rohrleitungen im Axialschnitt.

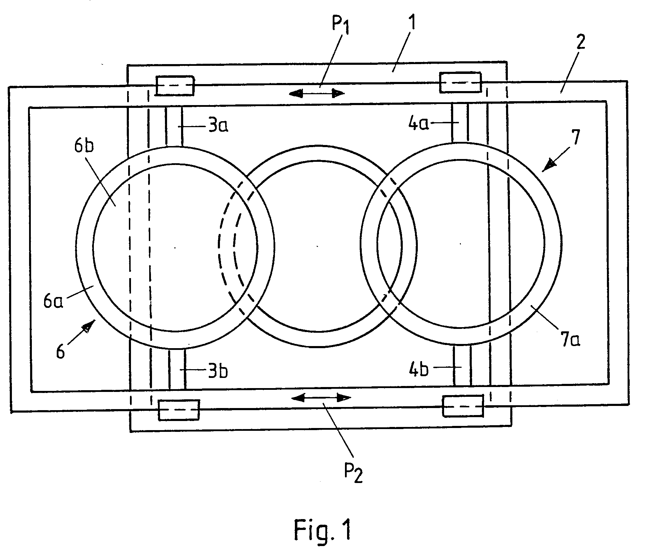

Der in Fig. 1 dargestellte Brillenschieber weist ein Gestell 1 auf, in dem ein Rahmen 2 in Richtung der Doppelpfeile P1,P2 verfahrbar gelagert ist. Der Rahmen 2 trägt an Führungs- und Haltearmen 3a,3b,4a,4b,5a,5b eine Vollscheibe 6 und eine Leerscheibe 7. Sowohl die Vollscheibe 6 als auch die Leerscheibe 7 bestehen aus zwei flanschartigen Teilen 6a,7a,7b. Die flanschartigen Teile 6a,7a,7b sind deckungsgleich miteinander mit Abstand gegenüberliegenden Flanschen 8a,8b von Rohrleitungen. Während die beiden Teile 6a der Vollscheibe 6 im Inneren durch eine Platte 6b verschlossen sind, sind die beiden Teile 7a,7b der Leerscheibe 7 offen. Wenn sich also die Vollscheibe 6 zwischen den Flanschen 8a,8b der Rohrleitung befindet, ist der Durchgang verschlossen, während freier Durchgang besteht, wenn die Leerscheibe 7 sich zwischen den Flanschen 8a,8b der Rohrleitungen befindet.

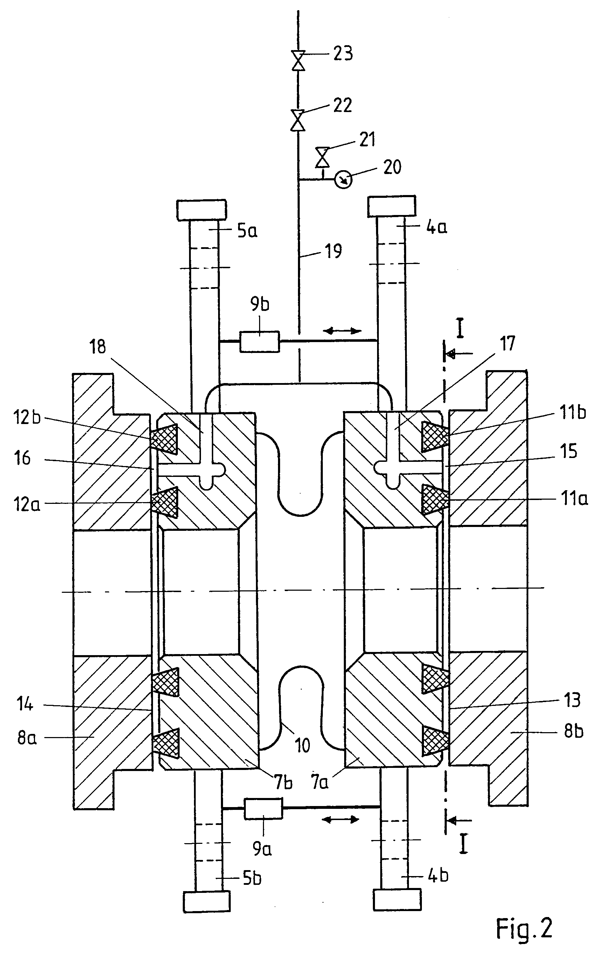

Die beiden Teile 6a bzw. 7a,7b der Voll- 6 bzw. Leerscheibe 7 haben im übrigen den gleichen Aufbau, so daß die weitere Beschreibung auf die Leerscheibe 7 beschränkt werden kann. Zwischen den beiden Teilen 7a,7b sind an den Halte- und Führungsarmen 4a,4b,5a,5b angreifende Spreizelemente 9a,9b angeordnet, die in der Zeichnung nur schematisch angedeutet sind. Mit diesen Spreizelementen 9a,9b läßt sich der Abstand der beiden Teile 7a,7b verändern. Beide Teile 7a,7b sind über einen Kompensator 10 nach außen abgedichtet miteinander verbunden. In den Stirnseiten der beiden Teile 7a,7b sind jeweils konzentrisch zwei Ringdichtungen 11a,11b, 12a,12b mit radialem Abstand voneinander eingebettet. Diese Ringdichtungen sind vorzugsweise als in Nuten eingepreßte Packungsdichtungen ausgebildet und bestehen aus wärmeunempfindlichem Material. Sofern, wie im Ausführungsbeispiel der Fig. 2 gezeigt, die beiden Teile 7a,7b durch die Spreizelemente 9a,9b gegen an den gegenüberliegenden Stirnseiten der Flansche 8a,8b der Rohrleitungen ausgebildete Dichtflächen 13,14 gedrückt werden, schließen die Ringdichtungen 11a,11b,12a,12b einen Ringraum 15,16 ab, in den eine Gaszufuhrleitung 17,18 einmündet. Über diese Zufuhrleitung 17,18 wird vorzugsweise Inertgas, insbesondere Stickstoffgas, mit Überdruck geleitet. An der gemeinsamen Speiseleitung 19 für dieses Inertgas sind ein Druckmanometer 20, ein Kontrollhahn 21 zur Prüfung von Gasaustritt aus der Rohrleitung, ein Rückschlagventil 22 und ein Druckreduzier- und -halteventil 23 angeschlossen. Das Druckreduzier- und -halteventil 23 wird in Abhängigkeit von dem im Inneren der Rohrleitung herrschenden Druck vorzugsweise so eingestellt, daß er in der Mitte zwischen dem Atmosphärendruck und dem Druck in dem Inneren der Rohrleitung liegt.

Das Druckmanometer 20 kann an einer nicht dargestellten Regeleinrichtung angeschlossen sein, die auch mit dem Druck im Inneren der Rohrleitung beaufschlagt wird. Diese Regeleinrichtung steuert dann das Druckreduzier- und -halteventil 23 auf den vorgegebenen Zwischendruck zwischen dem Rohrinnendruck und dem Rohraußendruck.

## Patentansprüche

1. Brillenschieber für Rohrleitungen, der in einer senkrecht zu den Rohrleitungen und zwischen an den Rohrleitungen ausgebildeten, einander gegenüberliegenden Dichtflächen (13,14) stehenden Ebene geradlinig bewegbar ist und der in einem Brillenrahmen (2) eine zweiteilige, als Absperrplatte dienende Vollscheibe (6) und eine zweiteilige Leerscheibe (7) aufweist, wobei die beiden Teile (6a,7a,7b) sowohl der Vollscheibe (6) als auch der Leerscheibe (7) zugewandte Ringdichtungen (11a,11b, 12a,12b) und Spreizelemente (9a,9b) aufweisen, mit denen die beiden Teile (6a,7a,7b) mit ihren Ringdichtungen (11a,11b,12a,12b) gegen die Dichtflächen (13,14) drückbar sind,
**dadurch gekennzeichnet,** daß jedes Teil (7a,7b) der Voll- (6) und Leerscheibe (7) mindestens eine weitere, mit radialem Abstand zur ersten Ringdichtung (11a,12a) angeordnete Ringdichtung (11b,12b) aufweist, und daß jeder von an derselben Dichtfläche (13,14) anliegenden, benachbarten Ringdichtungen (11a,11b,12a, 12b) abgeschlossene Ringraum (15,16) über eine Leitung (17,18) mit einem gasförmigen Medium druckbeaufschlagbar ist.

2. Brillenschieber nach Anspruch 1,
**dadurch gekennzeichnet,** daß die Leitung (17,18) für das gasförmige Medium in jedem Teil (6a,7a,7b) der Voll- und Leerscheibe (7) ausgebildet ist.

3. Brillenschieber nach Anspruch 1 oder 2,
**dadurch gekennzeichnet,** daß an der Leitung (17,18) für das gasförmige Medium ein Druckmanometer (20) angeschlossen ist.

4. Brillenschieber nach einem der Ansprüche 1 bis 3,
**dadurch gekennzeichnet,** daß an der Leitung (17,18) für das gasförmige Medium ein Druckreduzier- und -halteventil (22) angeschlossen ist.

5. Brillenschieber nach einem der Ansprüche 1 bis 4,
**dadurch gekennzeichnet,** daß ein Druckregler das gasförmige Medium in jedem Ringraum (15, 16) auf einen Druck zwischen dem Druck in den Rohrleitungen und dem Druck außerhalb der Rohrleitungen einstellt.
